# EUROPÄISCHE PATENTANMELDUNG

(11) **EP 4 578 350 A1**
(43) Veröffentlichungstag der Anmeldung: **02.07.2025**
(21) Anmeldenummer: 24156807.0
(22) Anmeldetag: 09.02.2024
(51) Int. Cl.: A47J 43/046, A47J 43/07, A47J 43/08

(54) **MULTIFUNKTIONSKÜCHENMASCHINE**

(30) Priorität: 29.12.2023 DE 102023136896
(71) Anmelder: Wundermix GmbH, 85748 Garching b. München (DE)
(72) Erfinder: Keusgen, Adrian, 79346 Endingen am Kaiserstuhl (DE)
(74) Vertreter: Patentanwälte Bauer Vorberg Kayser

(57) **Zusammenfassung**

Die vorliegende Erfindung betrifft eine Multifunktionsküchenmaschine, umfassend eine Küchenmaschinen-Basisstation mit einer Topfaufnahme, einen Topf (1), der in einem Betriebszustand in der Topfaufnahme angeordnet ist, und eine Mischvorrichtung (4) zum Mischen von Lebensmitteln.

Eine solche Multifunktionsküchenmaschine führt beim Mischen von Lebensmitteln oder Speisen zu einem verbesserten Mischergebnis.

## Beschreibung

Die vorliegende Erfindung betrifft eine Multifunktionsküchenmaschine.

Derartige Küchenmaschinen werden u.a. unter der Handelsbezeichnung bzw. dem Markenzeichen "Thermomix^{®}" vom Unternehmen Vorwerk vertrieben. Auch andere Hersteller bieten derartige Küchenmaschinen an. Wie der Ausdruck "Multifunktionsküchenmaschine" bereits selbst betont, kann eine solche Küchenmaschine eine Vielzahl von Funktionen ausüben. Eine Multifunktionsküchenmaschine kann z. B. zum Mischen, Zerkleinern, Garen von Lebensmitteln bzw. zum Zubereiten von Speisen verwendet werden.

Eine solche Multifunktionsküchenmaschine weist einen Topf auf, wobei der Topf einen Topfboden, eine Topföffnung und einen zwischen dem Topfboden und der Topföffnung angeordneten Topfmantel aufweist, wobei der Topfboden und der Topfmantel einen Topfinnenraum nach außen begrenzt. Der Topf ist in einer Küchenmaschinen-Basisstation aufgenommen, beispielsweise in einer Topfaufnahme. Der Topf kann ein Heizelement aufweisen, das über elektrische Kontakte der Küchenmaschinen-Basisstation kontaktierbar sein kann. Durch den Topfboden kann ein Rotationselement in den Topf hineinragen. Dazu kann eine Öffnung oder Aussparung in dem Topfboden ausgebildet sein. Das Rotationselement kann ein Mixmesser sein. Das Mixmesser dient als Rühr- oder Zerkleinerungswerkzeug. Das Mixmesser weist zumindest einen Werkzeugarm auf. An dem zumindest einen Werkzeugarm kann eine Klinge angeordnet oder ausgebildet sein. Vorzugsweise sind vier Werkzeugarme mit jeweiligen Klingen vorgesehen. Das Mixmesser kann auch einen Wellenstumpf umfassen. Das Rotationselement kann auch ein Wellenende sein. Das Rotationselement wird von einem elektrischen Antrieb der elektrischen Multifunktionsküchenmaschine elektrisch angetrieben. Zur Bedienung der Küchenmaschine kann ein Bedienfeld für einen Nutzer an der Küchenmaschinen-Basisstation vorgesehen sein.

Das Mixmesser kann zum Mischen von Lebensmittel oder Speisen genutzt werden. Dazu wird das Mixmesser rotiert. Aufgrund seiner arm- und klingenartigen Ausgestaltung und damit begrenzten Oberfläche weist das Mixmesser jedoch Nachteile beim Mischen bestimmter Lebensmittel oder Speisen auf, insbesondere beim Schlagen von Sahne oder Eischnee sowie beim Herstellen von Schäumen.

Aufgabe der vorliegenden Erfindung ist es daher, eine Multifunktionsküchenmaschine bereitzustellen, welche die beschriebenen Nachteile nicht aufweist.

Gelöst wird diese Aufgabe mit einer elektrischen Multifunktionsküchenmaschine gemäß Anspruch 1.

Die vorliegende Erfindung betrifft eine
Multifunktionsküchenmaschine, umfassend eine Küchenmaschinen-Basisstation mit einer Topfaufnahme,
einen Topf, der in einem Betriebszustand in der Topfaufnahme angeordnet ist,
ein in den Topf hineinragendes und rotierend um eine Rotationsachse angetriebenes Rotationselement,
einen optional vorgesehenen Mischtopf, der in dem Betriebszustand in den Topf eingesetzt oder auf den Topf aufgesetzt ist, und
eine Mischvorrichtung zum Mischen von Lebensmitteln, die ein Mischelement aufweist, das sich ausgehend von einem Grundkörper radial weg erstreckt, wobei an dem Mischelement ein um eine zu der Rotationsachse parallele Drehachse drehbares Mischteil drehbar gelagert ist,
wobei entweder - sofern kein optionaler Mischtopf vorgesehen ist - die Mischvorrichtung n dem Betriebszustand in dem Topf angeordnet ist und mit dem Rotationselement rotationsfest verbunden ist,
oder -sofern ein Mischtopf vorgesehen ist - die Mischvorrichtung in dem in den Topf eingesetzten oder auf den Topf aufgesetzten Mischtopf angeordnet ist und mit einer in den Mischtopf hineinragenden Adapterwelle rotationsfest verbunden ist, wobei die Adapterwelle ihrerseits dem Rotationselement rotationsfest verbunden ist.

Eine solche Anordnung führt aufgrund der zusätzlichen Drehachse zu einem verbesserten Mischergebnis, insbesondere beim Schlagen von Schäumen, Eischnee oder Sahne. Es kann vorgesehen sein, dass die Drehachse in einem Winkel (also nicht parallel) zu der Rotationsachse angeordnet ist, um das Mischergebnis weiter zu verbessern. Grundsätzlich können die Schneebesen unter einem Winkel von etwa 0 bis 90° zur Drehachse ausgerichtet sein, sie können sich also auch rechtwinklig zur Drehachse erstrecken. Eine Anordnung unter einem Winkel von etwa 45° zur Drehachse kann je nach Ausführung des Topfes oder des Topfinnenraum vorteilhaft sein.

Bei dem Topf kann es sich - gemäß der ersten "oder" Alternative (siehe die "entweder" Variante) um einen Zubereitungstopf der Küchenmaschine handeln. Der Topf weist einen Topfboden, eine Topföffnung und einen zwischen dem Topfboden und der Topföffnung angeordneten Topfmantel auf, wobei der Topfboden und der Topfmantel einen Topfinnenraum nach außen begrenzt. Das Rotationselement kann durch eine Aussparung bzw. Öffnung im Topfboden in den Topf, also den Topfinnenraum, hineinragen. Das Rotationselement kann aber auch durch die Topföffnung in den Topf, also den Topfinnenraum, hineinragen.

Der optional vorgesehene Mischtopf kann - wie erwähnt - in den Topf eingesetzt oder auf den Topf aufgesetzt werden. Sofern ein zum Einsetzen in den Topf vorgesehener Mischtopf vorgesehen ist, so ist dieser derart dimensioniert und gestaltet, dass - sofern im Bereich des Topfbodens des Topfes ein Rotationselement wie ein Mixmesser angeordnet ist - der Mischtopf mit seinem Mischtopfboden beabstandet in einem Abstand zu dem Rotationselement wie dem Mixmesser angeordnet ist. Der Mischtopf kann dann im Mischtopfboden eine Aussparung bzw. Öffnung aufweisen, durch die eine Adapterwelle hindurchgeführt werden kann, die sodann eine mechanische Verbindung zur Drehmomentübertragung zwischen dem Rotationselement (z. B. dem Mixmesser) und der Mischvorrichtung (in diesem Fall im Mischtopf angeordnet) herstellt. Der Mischtopf kann sich an Strukturen des Topfes, z. B. an einer Innenwandung des Topfmantels ausgebildeten Rippen oder Nuten abstützen. Dies kann auch einer Verdrehsicherung des Mischtopfes dienen. Der Mischtopf kann bei dieser Variante (eingesetzt in den Topf) mit einem eigens vorgesehenen Mischtopfdeckel abgedeckt werden, jedoch auch mit einem Topfdeckel des Topfes. Mischtopfdeckel oder Topfdeckel können jeweils eine Zuführöffnung (insbesondere eine zentrale Zuführöffnung) oder ein Beobachtungsfenster aufweisen. Mischtopfdeckel oder Topfdeckel können mit einem Verriegelungsmechanismus der Küchenmaschinen-Basisstation verriegelt werden, beispielsweise mit Verriegelungsarmen, die den Mischtopfdeckel bzw. Topfdeckel übergreifen.

Der optional vorgesehene Mischtopf kann - wie erwähnt - auf den Topf aufgesetzt werden. Damit kann gemeint sein, dass der Mischtopf mit seinem Mischtopfboden auf einen die Topföffnung begrenzenden Topfrand aufgesetzt wird, jedoch auch, dass der Mischtopf (z. B. mit seinem Mischtopfboden) auf einen Topfdeckel des Topfes aufgesetzt wird. Zum Aufsetzen können an der dem Topfdeckel zugewandten Seite des Mischtopfbodens eine oder mehrere Strukturen zum Aufstehen ausgebildet sein, z. B. ein Standfuß, ein Stehkragen oder ähnliches. Der Mischtopf kann im Mischtopfboden eine Aussparung bzw. Öffnung aufweisen, durch die eine Adapterwelle hindurchgeführt werden kann, die sodann eine mechanische Verbindung zur Drehmomentübertragung zwischen dem im Topf angeordneten Rotationselement (z. B. dem Mixmesser) und dem Mischelement (in diesem Fall im Mischtopf angeordnet) herstellt. Dazu wird die Adapterwelle auch durch eine Aussparung bzw. Öffnung im Topfdeckel des Topfes hindurchgeführt.

Die Mischvorrichtung ist insbesondere zum Mischen von Lebensmitteln bzw. Zutaten einer Speise vorgesehen. Unter einem Mischen kann insbesondere auch das Schlagen eines Schaums oder von Sahne verstanden werden. Auch kann ein Mischen das Schlagen von Eischnee betreffen.

Die Verwendung eines optional vorgesehenen Mischtopfes kann vorteilhaft sein, da das gemischte Mischgut nach dem Vermischen samt dem Mischtopf entnommen und z. B. im Kühlschrank gelagert werden kann. Dies bedeutet, dass ein und dasselbe Gefäß (der Mischtopf) sowohl zum Mischen als auch zum Lagern des vermischten Mischguts verwendet werden kann.

Weitere Ausgestaltungen sind in den Unteransprüchen sowie in der nachfolgenden Beschreibung angegeben.

Nach einer Ausgestaltung der Erfindung kann vorgesehen sein, dass das Mischteil ein Schneebesen, ein Rührgitter oder ein Rührpinsel ist. Ein Rührpinsel kann kreuzförmig angeordnete Rührborsten umfassen.

Nach einer Ausgestaltung der Erfindung kann vorgesehen sein, dass zwei sich gegenüberliegende Mischelemente vorgesehen sind. Dadurch wird ein besonders gutes Mischergebnis erzielt.

Nach einer Ausgestaltung der Erfindung kann vorgesehen sein, dass das Rotationselement ein Mixmesser ist, wobei - sofern kein optionaler Mischtopf vorgesehen ist - der Grundkörper über eine Koppeleinrichtung mit dem Mixmesser rotationsfest verbunden ist, wobei die Koppeleinrichtung dazu einerseits mit dem Grundkörper verbunden ist und andererseits eine Kopplungsschnittstelle zur rotationsfesten Kopplung mit dem Mixmesser aufweist.

Nach einer Ausgestaltung der Erfindung kann vorgesehen sein, dass das Rotationselement ein Mixmesser ist, wobei - sofern ein Mischtopf vorgesehen ist - die Adapterwelle an einem ersten Adapterwellen-Ende eine erste Koppeleinrichtung aufweist, mit dem die Adapterwelle rotationsfest mit dem Rotationselement verbunden ist, wobei die Adapterwelle an einem dem ersten Adapterwellen-Ende gegenüberliegenden zweiten Adapterwellen-Ende eine zweite Koppeleinrichtung aufweist, mit dem die Adapterwelle rotationsfest mit der Mischvorrichtung verbunden ist.

Nach einer Ausgestaltung der Erfindung kann vorgesehen sein, dass in dem Mischtopf, insbesondere in einem Mischtopf-Boden eine Öffnung ausgebildet ist, durch welche die Adapterwelle hindurchragt.

Nach einer Ausgestaltung der Erfindung kann vorgesehen sein, dass der Mischtopf derart auf den Topf aufgesetzt, dass der Mischtopf auf einem Deckel des Topfes aufgesetzt ist, wobei der Deckel eine zentrale Öffnung aufweist, durch welche die Adapterwelle hindurchragt.

Nach einer Ausgestaltung der Erfindung kann vorgesehen sein, dass der Mischtopf eine Abstützvorrichtung aufweist, mit welcher sich Mischtopf an einem an dem Deckel, dem Topf, oder der Küchenmaschinen-Basisstation angeordneten Strukturelement abstützt. Dies kann einer Verdrehsicherung dienen.

Grundsätzlich kann es ausreichen, wenn nur ein Mischteil am Rotationselement gelagert ist, vorzugsweise sind aber zwei oder mehr Mischteile vorgesehen. Sollten zwei oder mehr Mischteil vorgesehen sein, ist es vorteilhaft, wenn diese gleichmäßig über den Umfang verteilt angeordnet, also beispielsweise jeweils paarweise diametral einander gegenüberliegend positioniert sind. Dies vermeidet Unwuchten und gewährleistet ein gleichmäßiges Drehen des Rotationselements. Insbesondere haben sich zwei oder vier Mischteile als besonders vorteilhaft erwiesen.

Wie bereits ausgeführt, sind vorzugsweise zwei einander diametral gegenüberliegende Mischteile vorgesehen, wovon in der nachfolgenden Beschreibung zum besseren Verständnis ausgegangen wird. Dies bedeutet jedoch nicht, dass die Erfindung darauf beschränkt sein soll, vielmehr ist auch die Nutzung von nur einem Mischteil oder auch von mehreren Mischteilen möglich.

Erfindungsgemäß können die Mischteile lediglich drehbar gelagert und nicht angetrieben ausgeführt sein, sodass sie aufgrund der Drehung des Rotationselements und durch Kontakt mit dem zu rührenden oder zu mischenden Lebensmittel in Drehung um ihre Drehachsen versetzt werden. In einer weiteren besonders vorteilhaften Ausführungsvariante können die Mischteile aber auch selbst über einen Antrieb angetrieben ausgeführt sein. Die Mischteile können in die gleiche Drehrichtung wie das Rotationselement oder in die entgegengesetzte Richtung gedreht werden. Auch ist es möglich, dass die Drehgeschwindigkeit zwischen dem Rotationselement und den Mischteilen oder sogar zwischen den Mischteilen selbst unterschiedlich ist.

In einer besonders vorteilhaften Ausführungsvariante wird als Antrieb der Mischteile die Drehbewegung des Rotationselements genutzt. Diese Möglichkeit besteht bei beiden bereits beschriebenen Ausführungsvarianten, wobei die Drehbewegung des Grundkörpers dann direkt oder, falls verwendet, über die Adapterwelle über ein Getriebe auf die jeweiligen Mischteile übertragen wird. Wird das Rotationselement angetrieben bzw. in Drehung versetzt, drehen sich die Mischteile automatisch um die Rotationsache des Rotationselements und zusätzlich jeweils um ihre Drehachsen.

Ein Antriebsritzel kann ortsfest im Topf oder Mischtopf angeordnet und nicht drehbar gegenüber dem Grundkörper oder der Adapterwelle ausgeführt sein. Der Grundkörper oder die Adapterwelle übertragen in diesem Fall ihre Drehbewegung auf das Mischelement, über welches die Mischteile um das zentral angeordnete Antriebsritzel kreisen. Die Zahnräder der Mischteile (oder ggfs. die Zwischenzahnräder) rollen dann auf diesem ab, sobald sich das Mischelement, welches fest mit dem Rotationselement oder der Adapterwelle verbunden ist, dreht. Das Antriebsritzel ist in dieser Variante sozusagen als Sonnenrad ausgeführt, die Zahnräder als um dieses kreisende Planetenräder. Der Grundkörper bzw. die Adapterwelle können sich vorteilhafterweise durch das ringförmige als Zahnradring ausgeführte Antriebsritzel hindurch erstrecken oder mittig bzw. zentral am Antriebsritzel gelagert sein. Der Grundkörper bzw. die Adapterwelle können drehen, ohne dass sich das Antriebsritzel mitdreht.

Das Mischelement und die Mischteile können in einer bevorzugten Ausführungsvariante an einem scheibenförmigen Stator befestigt bzw. gelagert sein, der von oben auf die Topföffnung oder in den Topfinnenraum einsetzbar ist. Der Stator ist drehfest am oder im Topf gehalten, er kann sich zum Beispiel an Strukturen des Topfes, z. B. an der Innenwandung des Topfmantels ausgebildeten Rippen oder Nuten abstützen.

Der Stator weist eine Wellenöffnung für den Grundkörper oder die Adapterwelle auf, die mit ihrem sich in Richtung des Rotationselements weisenden Enden mit dem angetrieben Rotationselement koppelbar sind.

Die Adapterwelle erstreckt sich beispielsweise durch die Wellenöffnung hindurch, wenn der Stator in den Topf eingesetzt ist und kann sich in der Wellenöffnung frei drehen. Die Wellenöffnung ist von einem Zahnradring umgeben, der als Antriebsritzel für damit kämmende Zahnräder dient. Anstelle einer Wellenöffnung kann der Stator auch eine durchgängige Fläche ohne Wellenöffnung aufweisen. Entweder kontaktieren der Grundkörper oder die Adapterwelle den Stator mit ihrem freien Ende nicht oder das freie Ende ist am Stator drehbar gelagert, was die Stabilität im Betrieb verbessert.

Der Grundkörper oder die Adapterwelle sind fest mit dem sich davon radial weg erstreckenden Mischelement verbunden, an welchem die mit einem Zahnrad drehfest verbundenen Mischteile drehbar gelagert sind. Wie erläutert ist die Position und Größe der Zahnräder derart gewählt, dass diese mit dem Antriebsritzel, also mit dem die Wellenöffnung umgebenden Zahnradring kämmen. Wird das Mischelement in Drehung versetzt, rollen die Zahnräder auf dem am Stator angeordneten Zahnradring ab und versetzen die Mischteile in Drehung. In Abhängigkeit der Durchmesser der Zahnräder im Verhältnis zum Zahnradring bzw. dem Antriebsritzel ist die Drehgeschwindigkeit der Mischteile wählbar.

Alternativ kann das Antriebsritzel auch fest mit der Adapterwelle verbunden sein, der beschriebene Zahnradring am Stator ist dann nicht notwendig. Beispielsweise können das Grundelement oder die Adapterwelle auf ihrer Außenseite eine entsprechende Zahnstruktur nach Art einer Zahnradwelle aufweisen, die die Zahnräder der Mischteile antreibt. Bei dieser Ausführungsvariante kreisen die Mischteile nicht um das ortsfeste um zentral angeordnete Antriebsritzel, sondern sind selbst ortsfest am Stator gelagert. Auf das sich radial erstreckende und mitdrehende Mischelement kann mit dieser Ausführungsform verzichtet werden.

Die Mischvorrichtung kann vorzugsweise auch als Mixtopfverkleinerung dienen, wenn der Stator derart ausgeführt ist, dass dieser in den Topfinnenraum eingesetzt werden kann. Dies ist insbesondere bei konisch zulaufenden Töpfen der Fall, die sich in Richtung des Topfbodens verjüngen. Der Durchmesser des Stators ist dann so gewählt, dass dieser von oben beispielsweise bis zur mittleren Höhe des Topfinnenraums in diesen einsetzbar ist.

Dadurch, dass der Stator an der Innenwand des Topfes anliegt, verhindert dieser wirkungsvoll ein Aufsteigen des Lebensmittels an der Innenwand nach oben in Richtung der Topföffnung. Auch bleibt die Innenseite des Topfdeckels sauber, es kann nichts aus dem Mixtopf herausspritzen. Um den Mischfortschritt oder das Ergebnis trotzdem sehen zu können, kann der Stator vorteilhafterweise aus einem transparenten Material gefertigt sein.

Das Getriebe kann derart ausgelegt sein, dass sich die Mischteile gleich schnell oder schneller als das Rotationselement drehen. Es hat sich beispielsweise gezeigt, dass dann, wenn die Mischteile schneller als das Rotationselement drehen, eine besonders gute Luftbeaufschlagung von Sahne erfolgt. Die Mischteile übernehmen in diesem Fall nahezu komplett die Funktion des Aufschlagens der Sahne.

Die Erfindung wird anhand der Figuren näher erläutert. Diese zeigen in:
- Fig. 1: eine schematische Perspektivdarstellung einer in einem Topf einer Multifunktionsküchenmaschine angeordneten Mischvorrichtung nach einem ersten Ausführungsbeispiel der Erfindung;
- Fig. 2: eine Detailansicht der Mischvorrichtung wie in Fig. 1 gezeigt;
- Fig. 3: eine Explosionsansicht der Komponenten nach Fig. 1;
- Fig. 4: eine schematische Perspektivdarstellung einer in einem Topf einer Multifunktionsküchenmaschine angeordneten Mischvorrichtung nach einem weiteren Ausführungsbeispiel der Erfindung;
- Fig. 5: eine Detailansicht der Mischvorrichtung wie in Fig. 4 gezeigt;
- Fig. 6: eine schematische Perspektivdarstellung einer in einem Mischtopf, der auf den Topf einer Multifunktionsküchenmaschine aufgesetzt ist, angeordneten Mischvorrichtung nach einem weiteren Ausführungsbeispiel der Erfindung;
- Fig. 7: eine Schnittansicht der Darstellung nach Fig. 6;
- Fig. 8: eine Detailansicht der Mischvorrichtung wie in Fig. 6 gezeigt,
- Fig. 9: eine weitere Ausführungsvariante der Erfindung mit einem Stator und einem Getriebe in Explosivdarstellung,
- Fig. 10: die Ausführungsvariante aus Fig. 9 perspektivischer Darstellung,
- Fig. 11: die Ausführungsvariante aus Fig. 9 von unten,
- Fig. 12: die Ausführungsvariante aus Fig. 9 von der Seite.

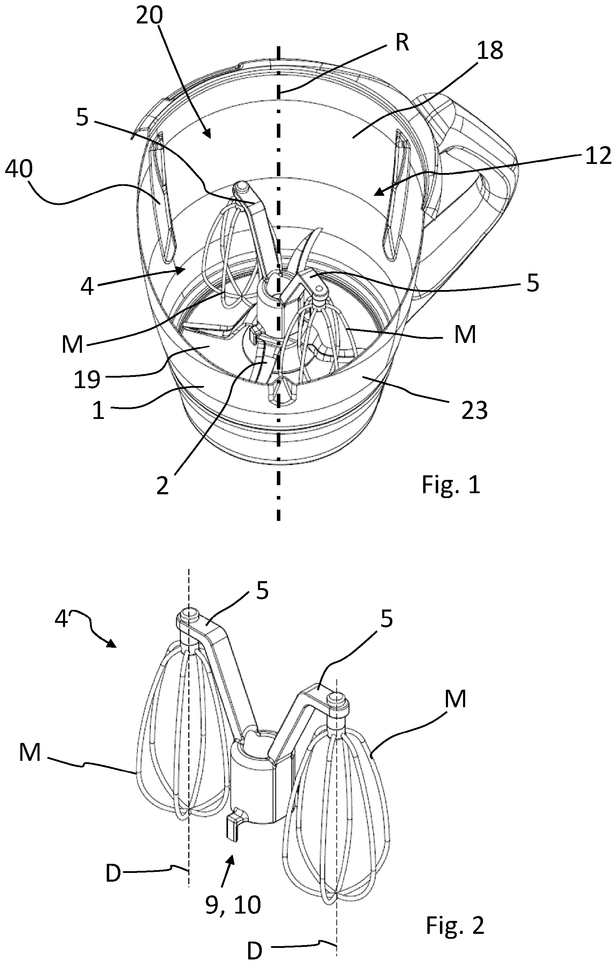

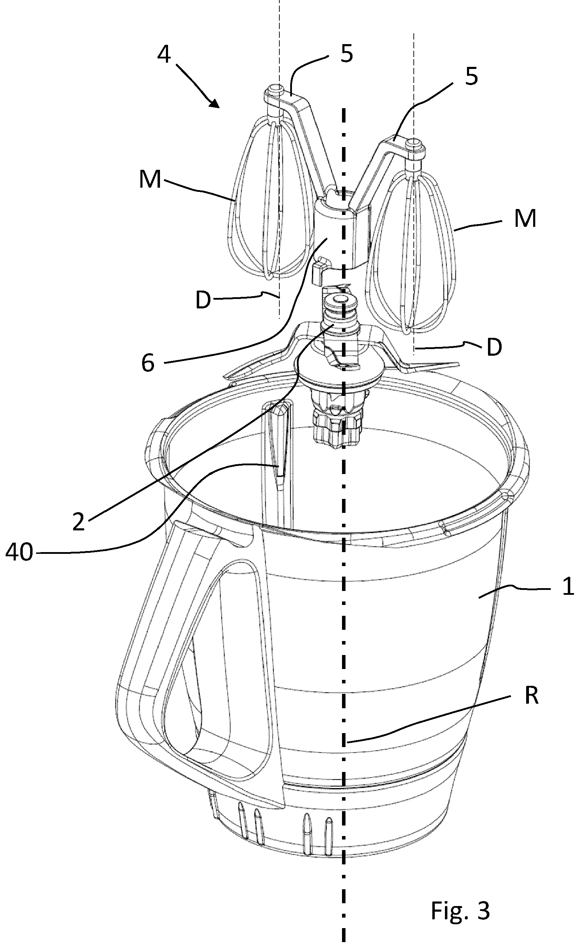

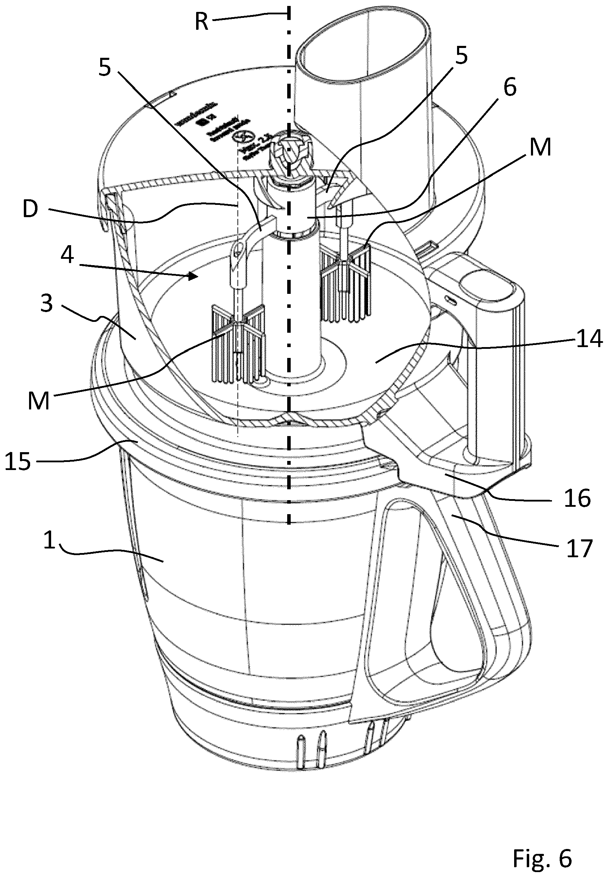

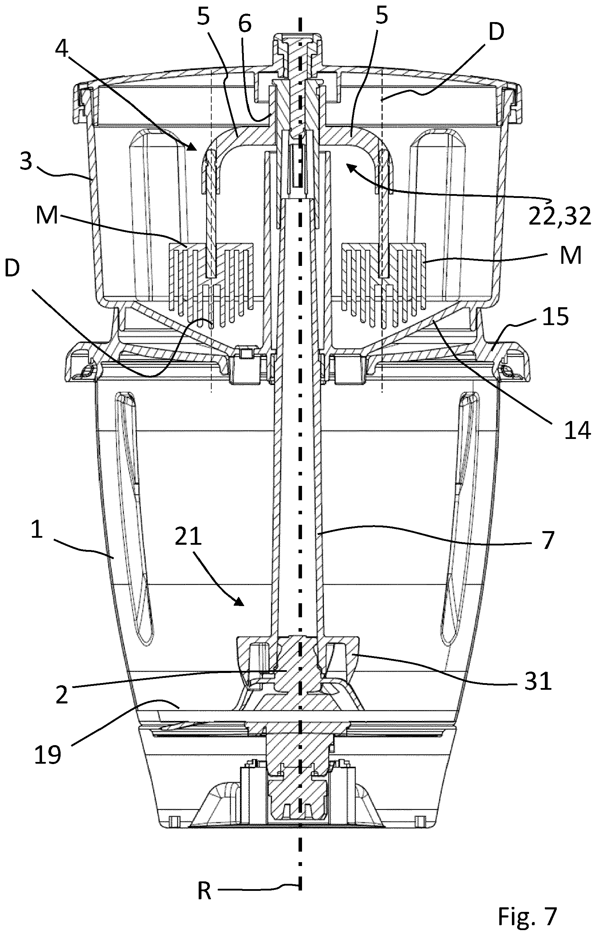

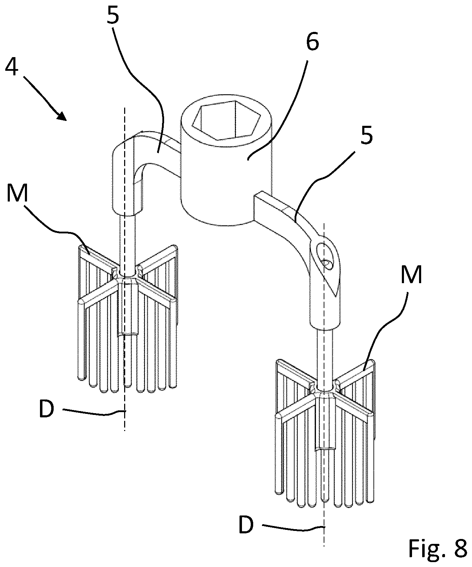

Die Figuren offenbaren im Allgemeinen eine Multifunktionsküchenmaschine, umfassend eine Küchenmaschinen-Basisstation mit einer Topfaufnahme, einen Topf 1, der in einem Betriebszustand in der Topfaufnahme angeordnet ist, ein in den Topf 1 hineinragendes und rotierend um eine Rotationsachse R angetriebenes Rotationselement 2, und einen optional vorgesehenen Mischtopf 3 (vgl. Fig. 6 bis 8), der in dem Betriebszustand auf den Topf 1 aufgesetzt ist, sowie eine Mischvorrichtung 4 zum Mischen von Lebensmitteln, die ein Mischelement 5 aufweist, das sich ausgehend von einem Grundkörper 6 radial weg erstreckt, wobei an dem Mischelement 5 ein um eine zu der Rotationsachse R parallele Drehachse D drehbares Mischteil M drehbar gelagert ist,
wobei entweder - sofern kein optionaler Mischtopf 3 vorgesehen ist (Fig. 1 bis 5) - die Mischvorrichtung 4 in dem Betriebszustand in dem Topf 1 angeordnet ist und mit dem Rotationselement 2 rotationsfest verbunden ist,
oder -sofern ein Mischtopf 3 vorgesehen ist (Fig. 6 bis 8) - die Mischvorrichtung 4 auf dem auf den Topf 1 aufgesetzten Mischtopf 3 angeordnet ist und mit einer in den Mischtopf 3 hineinragenden Adapterwelle 7 rotationsfest verbunden ist, wobei die Adapterwelle 7 ihrerseits dem Rotationselement 2 rotationsfest verbunden ist.

Es sind bei allen Ausführungsbeispielen zwei sich gegenüberliegende Mischelemente 5 vorgesehen.

Das Rotationselement 2 ist ein Mixmesser, wobei - sofern kein optionaler Mischtopf 3 vorgesehen ist (Fig. 1 bis 5) - der Grundkörper 6 über eine Koppeleinrichtung 9 mit dem Mixmesser rotationsfest verbunden ist, wobei die Koppeleinrichtung 9 dazu einerseits mit dem Grundkörper 6 verbunden ist und andererseits eine Kopplungsschnittstelle 10 zur rotationsfesten Kopplung mit dem Mixmesser aufweist.

Das Rotationselement 2 ist ein Mixmesser, wobei - sofern ein Mischtopf 3 vorgesehen ist (Fig. 6 bis 8) - die Adapterwelle 7 an einem ersten Adapterwellen-Ende 21 eine erste Koppeleinrichtung 31 aufweist, mit dem die Adapterwelle 7 rotationsfest mit dem Rotationselement 2 verbunden ist, wobei die Adapterwelle 7 an einem dem ersten Adapterwellen-Ende 21 gegenüberliegenden zweiten Adapterwellen-Ende 22 eine zweite Koppeleinrichtung 32 aufweist, mit dem die Adapterwelle 7 rotationsfest mit der Mischvorrichtung 4 verbunden ist.

In dem Mischtopf 3 ist, insbesondere in einem Mischtopf-Boden 14 eine Öffnung ausgebildet, durch welche die Adapterwelle 7 hindurchragt.

Der Mischtopf 3 derart auf den Topf 1 aufgesetzt, dass der Mischtopf 3 auf einem Deckel 15 des Topfes 1 aufgesetzt ist, wobei der Deckel 15 eine zentrale Öffnung aufweist, durch welche die Adapterwelle 7 hindurchragt.

Der Mischtopf 3 weist eine Abstützvorrichtung 16 auf, mit welcher sich Mischtopf 3 an einem an dem Topf 1 angeordneten Strukturelement 17 abstützt (Fig. 6).

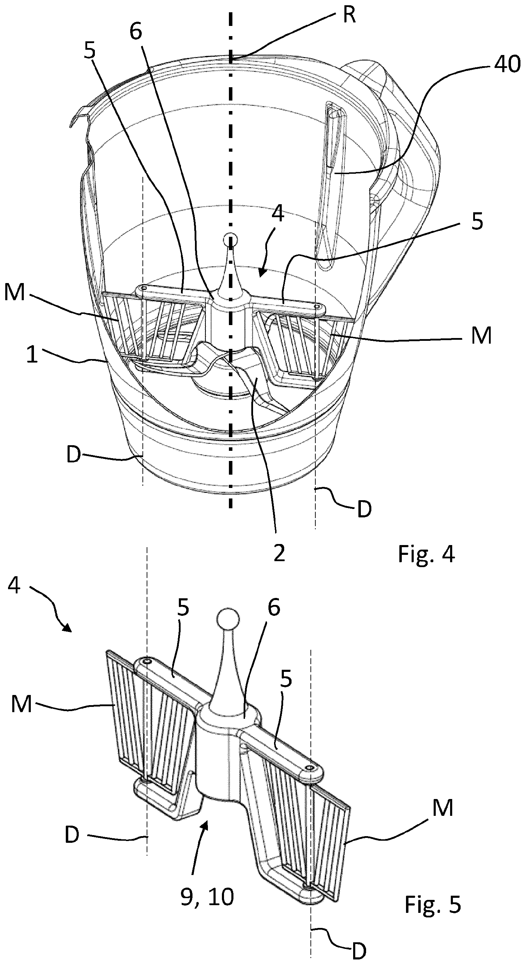

Die Figuren 1 bis 8 zeigen drei Varianten von Mischteilen M. Die Figuren 1 bis 3 zeigen ein Mischteil M in Form eines Schneebesens. Die Figuren 4 und 5 zeigen ein Mischteil M in Form eines Rührgitters, während die Figuren 6 bis 8 ein Mischteil in Form eines Rührpinsels zeigen. Ferner zeigen die Figuren 6 bis 8 eine Anordnung der Mischvorrichtung 4 in einem auf den Topf 1 aufgesetzten Mischtopf 3, während die Figuren 1 bis 5 eine Anordnung der Mischvorrichtung in dem Topf 1 der Küchenmaschine zeigen.

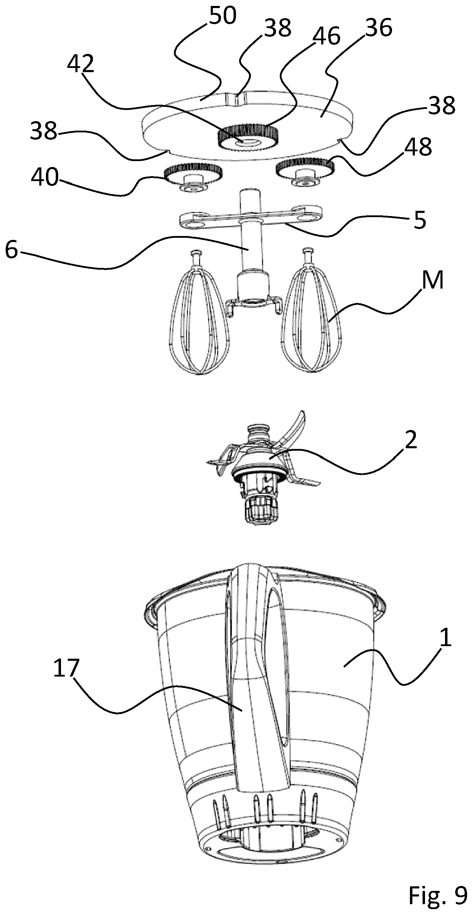

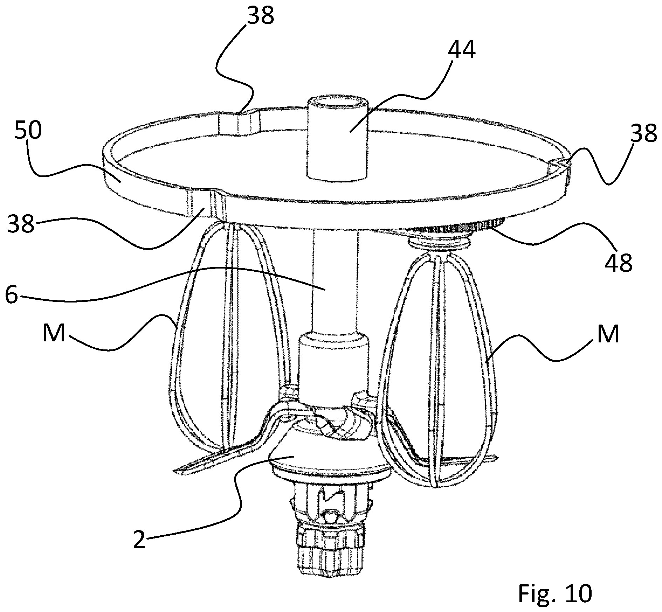

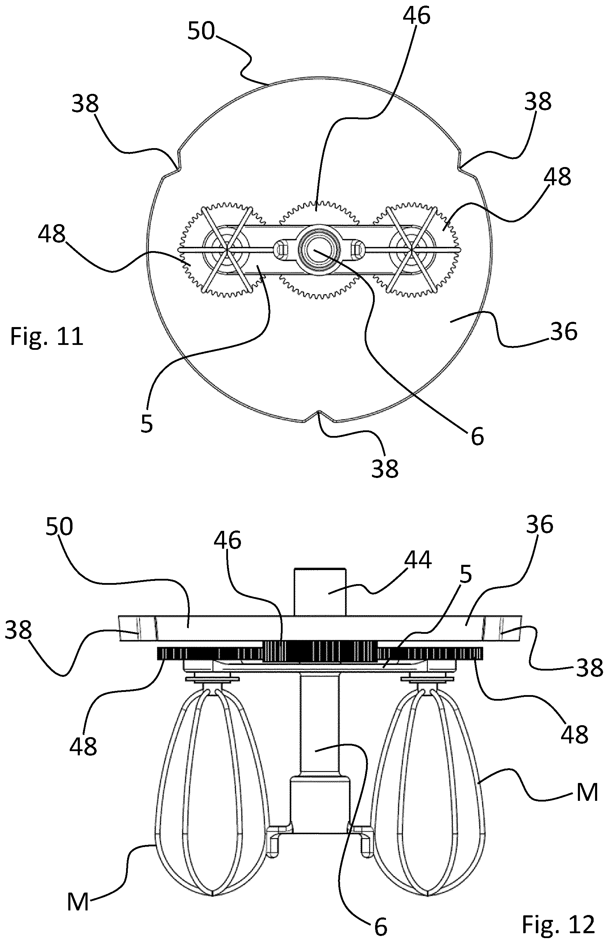

Die Figuren 9 bis 12 zeigen die Ausführungsvariante der Erfindung, bei der zur Verbesserung oder zur Anpassung des Mischergebnisses ein Antrieb für die Mischteile M vorgesehen ist. Gezeigt ist eine Ausführungsvariante, bei der das Mischelement 5 mit den Mischteilen M in den Topf 1 einsetzbar ist. Unabhängig davon ist es aber auch möglich, eine derartige Anordnung im Mischtopf 3 unter Zuhilfenahme einer entsprechend ausgebildeten Adapterwelle 7 zu positionieren.

Das Mischelement 5 und die Mischteile M sind im gezeigten Ausführungsbeispiel an einem scheibenförmigen Stator 36 befestigt bzw. gelagert, der von oben durch die Topföffnung 20 in den Topfinnenraum 12 einsetzbar ist. Der Stator 36 ist drehfest am oder im Topf 1 gehalten, was durch Nuten 38 in der Umfangsfläche 50 bewirkt wird, durch die sich im eigesetzten Zustand des Stators 36 an der Innenwand 18 des Topfs 1 ausgebildeten Rippen 40 hindurch erstrecken. Im gezeigten Ausführungsbeispiel sind drei Nuten 38 vorgesehen, die mit drei Rippen 40, die sich im Wesentlichen parallel zur Rotationsachse R erstrecken, zusammenwirken.

Der Stator 36 weist eine Wellenöffnung 42 für den Grundkörper 6 (oder bei der Verwendung eines Mischtopfes 3 für die Adapterwelle) auf, die mit ihrem sich in Richtung des Rotationselements 2 weisenden Adapterwellen-Ende 21 mit dem angetrieben Rotationselement 2 koppelbar ist. Im gezeigten Ausführungsbeispiel befindet sich auf der den Mischteilen M abgewandten Seite ein ringförmiges Lager 44 für das sich durch die Wellenöffnung 42 erstreckende freie Ende des Grundkörpers 6 oder der Adapterwelle 7.

Der Grundkörper 6 erstreckt sich also durch die Wellenöffnung 42 hindurch, wenn der Stator 36 in den Topf eingesetzt ist und kann sich in der Wellenöffnung 42 frei drehen. Die Wellenöffnung 42 ist auf ihrer dem Rotationselement 2 zugewandten Seite von einem drehfest am Stator 36 angeordneten Zahnradring 46 umgeben, der als Antriebsritzel für damit kämmende Zahnräder 48 dient. Der Stator 36 und der Zahnradring 46 können vorzugsweise einstückig ausgeführt sein.

Der Grundkörper 6 ist fest mit dem sich davon radial weg erstreckenden Mischelement 5 verbunden, an welchem die mit einem Zahnrad 48 drehfest verbundenen Mischteile M drehbar gelagert sind. Die Zahnräder 48 der Mischteile M kämmen mit dem als Zahnradring 46 ausgeführten Antriebsritzel. Wird das Mischelement 5 in Drehung versetzt, rollen die Zahnräder auf dem Zahnradring 46 ab und versetzen dadurch die Mischteile M in Drehung.

Der Antrieb der Mischteile M wird also über ein Getriebe 34 bewirkt, dass im gezeigten Ausführungsbeispiel aus dem Zahnradring 46 und den Zahnrädern 48 gebildet ist.

Der Stator 36 ist vorzugsweise aus einem transparenten Material gefertigt, um die Sichtbarkeit er zu mischenden Lebensmittel zu ermöglichen.

### Bezugszeichenliste

- 1: Topf
- 2: Rotationselement
- 3: Mischtopf
- 4: Mischvorrichtung
- 5: Mischelement
- 6: Grundkörper
- 7: Adapterwelle
- 9: Koppeleinrichtung
- 10: Kopplungsschnittstelle
- 12: Topfinnenraum
- 14: Mischtopf-Boden
- 15: Deckel
- 16: Abstützvorrichtung
- 17: Strukturelement
- 18: Innenwand
- 19: Topfboden
- 20: Topföffnung
- 21: erstes Adapterwellen-Ende
- 22: zweites Adapterwellen-Ende
- 23: Topfmantel
- 31: erste Koppeleinrichtung
- 32: zweite Koppeleinrichtung
- 36: Stator
- 38: Nuten
- 40: Rippen
- 42: Wellenöffnung
- 44: Lager
- 46: Zahnradring
- 48: Zahnrad
- 50: Umfangsfläche
- R: Rotationsachse
- D: Drehachse
- M: Mischteil

## Patentansprüche

1. Multifunktionsküchenmaschine, umfassend eine Küchenmaschinen-Basisstation mit einer Topfaufnahme,
einen Topf (1), der in einem Betriebszustand in der Topfaufnahme angeordnet ist,
ein in den Topf (1) hineinragendes und rotierend um eine Rotationsachse (R) angetriebenes Rotationselement (2),
einen optional vorgesehenen Mischtopf (3), der in dem Betriebszustand in den Topf (1) eingesetzt oder auf den Topf (1) aufgesetzt ist, und
eine Mischvorrichtung (4) zum Mischen von Lebensmitteln, die ein Mischelement (5) aufweist, das sich ausgehend von einem Grundkörper (6) radial weg erstreckt, wobei an dem Mischelement (5) ein um eine zu der Rotationsachse (R) parallele oder in einem Winkel zur Rotationsachse (R) angeordnete Drehachse (D) drehbares Mischteil (M) drehbar gelagert ist,
wobei entweder - sofern kein optionaler Mischtopf (3) vorgesehen ist - die Mischvorrichtung (4) in dem Betriebszustand in dem Topf (1) angeordnet ist und mit dem Rotationselement (2) rotationsfest verbunden ist,
oder -sofern ein Mischtopf (3) vorgesehen ist - die Mischvorrichtung (4) in dem in den Topf (1) eingesetzten oder auf den Topf (1) aufgesetzten Mischtopf (3) angeordnet ist und mit einer in den Mischtopf (3) hineinragenden Adapterwelle (7) rotationsfest verbunden ist, wobei die Adapterwelle (7) ihrerseits dem Rotationselement (2) rotationsfest verbunden ist.

2. Multifunktionsküchenmaschine nach Anspruch 1, wobei das Mischteil (M) ein Schneebesen, ein Rührgitter oder ein Rührpinsel ist.

3. Multifunktionsküchenmaschine nach einem der vorangehenden Ansprüche, wobei zwei sich gegenüberliegende Mischelemente (5) vorgesehen sind.

4. Multifunktionsküchenmaschine nach einem der vorangehenden Ansprüche, wobei das Rotationselement (2) ein Mixmesser ist, wobei - sofern kein optionaler Mischtopf (3) vorgesehen ist - der Grundkörper (6) über eine Koppeleinrichtung (9) mit dem Mixmesser rotationsfest verbunden ist, wobei die Koppeleinrichtung (9) dazu einerseits mit dem Grundkörper (6) verbunden ist und andererseits eine Kopplungsschnittstelle (10) zur rotationsfesten Kopplung mit dem Mixmesser aufweist.

5. Multifunktionsküchenmaschine einem der vorangehenden Ansprüche, wobei das Rotationselement (2) ein Mixmesser ist, wobei - sofern ein Mischtopf (3) vorgesehen ist - die Adapterwelle (7) an einem ersten Adapterwellen-Ende (21) eine erste Koppeleinrichtung (31) aufweist, mit dem die Adapterwelle (7) rotationsfest mit dem Rotationselement (2) verbunden ist, wobei die Adapterwelle (7) an einem dem ersten Adapterwellen-Ende (21) gegenüberliegenden zweiten Adapterwellen-Ende (22) eine zweite Koppeleinrichtung (32) aufweist, mit dem die Adapterwelle (7) rotationsfest mit der Mischvorrichtung (4) verbunden ist.

6. Multifunktionsküchenmaschine nach Anspruch 5, wobei in dem Mischtopf (3), insbesondere in einem Mischtopf-Boden (14) eine Öffnung ausgebildet ist, durch welche die Adapterwelle (7) hindurchragt.

7. Multifunktionsküchenmaschine nach einem der Ansprüche 5 oder 6, wobei der Mischtopf (3) derart auf den Topf (1) aufgesetzt, dass der Mischtopf (3) auf einem Deckel (15) des Topfes (1) aufgesetzt ist, wobei der Deckel (15) eine zentrale Öffnung aufweist, durch welche die Adapterwelle (7) hindurchragt.

8. Multifunktionsküchenmaschine nach Anspruch 7, wobei der Mischtopf (3) eine Abstützvorrichtung (16) aufweist, mit welcher sich Mischtopf (3) an einem an dem Deckel (15), dem Topf (1), oder der Küchenmaschinen-Basisstation angeordneten Strukturelement (17) abstützt.

9. Multifunktionsküchenmaschine nach einem der Ansprüche 1 bis 8, wobei das Mischteil (M) über einen Antrieb in Drehung versetzt wird.

10. Multifunktionsküchenmaschine Anspruch 8, wobei als Antrieb für das Mischteil (M) ein Getriebe vorgesehen ist, welches die Drehbewegung des Rotationselements (2) auf das Mischteil (M) überträgt.

11. Multifunktionsküchenmaschine nach Anspruch 9 oder 10, wobei ein scheibenförmiger Stator (36) vorgesehen ist, der
- drehfest im Topf (1) oder Mischtopf (3) gehalten ist,
- eine Wellenöffnung (42) für den Grundkörper (6) - oder bei der Verwendung eines Mischtopfes (3) für die Adapterwelle 7 - und
- auf der Seite der Mischteile M angeordnete Wellenöffnung (42) umgebenden Zahnradring (46) aufweist,
wobei das Mischteil M drehbar am Mischelement (5) gelagert und drehfest mit einem Zahnrad (48) verbunden ist, welches mit dem Zahnradring (48) kämmt und auf diesem abrollt, wenn das Mischelement (5) dreht.

12. Multifunktionsküchenmaschine nach Anspruch 11, wobei der Stator (36) durch Nuten (38) in der Umfangsfläche (50) drehfest im Topf (1) oder Mischtopf (3) gehalten wird, durch die sich im eigesetzten Zustand des Stators (36) an der Innenwand (18) des Topfs (1) oder Mischtopfs (3) ausgebildete Rippen (40) hindurch erstrecken
